# EUROPEAN PATENT SPECIFICATION

(11) **EP 1 610 628 B1**
(45) Date of publication and mention of the grant of the patent: **19.05.2010**
(21) Application number: 04727031.9
(22) Date of filing: 13.04.2004
(51) Int. Cl.: A23L 1/30, C11C 3/00, C11C 3/08, C11C 3/10

(54) **PROCESS FOR THE PRODUCTION OF A STEROL-RICH COMPOSITION**
VERFAHREN ZUR HERSTELLUNG VON ZUBEREITUNGEN MIT HOHEM STEROLGEHALT
PROCEDE PERMETTANT LA PREPARATION D'UNE COMPOSITION A HAUTE TENEUR EN STEROL

(30) Priority: 10.04.2003 FI 20030540
(43) Date of publication of application: 04.01.2006
(73) Proprietor: Raisio Nutrition Ltd., 21200 Raisio (FI)
(72) Inventor: ORTE, Juha, FI-21200 Raisio (FI); LUTTIKHEDDE, Hendrik, FI-21260 Raisio (FI); WESTER, Ingmar, FI-20100 Turku (FI); EKBLOM, Jari, FI-21210 Raisio (FI)
(74) Representative: Svensson, Johan Henrik
(86) International application number: PCT/FI2004/000226
(87) International publication number: WO 2004/089116

(56) References cited:
- EP-A- 1 179 535
- EP-A- 1 179 536
- WO-A-01/72136
- WO-A-97/21697
- WO-A-98/01126
- WO-A-03/022064

## Description

The present invention relates to a process for the production of a sterol fatty acid ester-rich composition, and to a method for recovering food-grade sterol fatty acid ester(s) from a fat mixture containing the sterol fatty acid ester(s).

The present invention particularly relates to a process for the production of a sterol fatty acid ester-rich composition by a catalytic esterification of a mixture comprising at least a sterol composition and a fatty acid glyceride composition. The present invention also relates to a method for recovering food-grade sterol fatty acid ester(s) from a fat mixture containing fatty acid glycerides and the sterol fatty acid ester(s), said method also producing fatty acid alkyl ester(s) which can be used in said process for the production of the sterol fatty acid ester-rich composition.

### BACKGROUND

A high serum cholesterol value is believed to be one of the most significant single indicator of the risk of coronary disease. Serum cholesterol levels can be lowered by dietary means, by paying attention to the quantity and type of the oil or fat ingested and to the amount of cholesterol intake. It is known that ingested plant sterol lowers the level of serum cholesterol in human and animals. Studies have shown that orally administered plant sterols, such as sitosterol and its hydrogenated congener sitostanol, reduce serum total and low density lipoprotein (LDL) cholesterol levels by partly inhibiting the absorption of both dietary and biliary cholesterol from the intestines. Sitostanol is believed to be one of the most effective inhibitors of cholesterol absorption. The use of plant sterols in foods, particularly in so-called functional foods, as well as in pharmaceutical and cosmetic products has therefore gained much interest.

Although both free crystalline plant sterols and their fatty acid esters can be utilised in these applications, the fatty acid esters are preferred for several reasons. Sterols have to be in a bioavailable form in order to be capable of inhibiting the absorption of cholesterol. Various preparations of free plant sterols dissolve at different rates in the fat phase of the food digesta and will therefore affect cholesterol absorption with different efficaces.

Different food products can easily be enriched with a desired level of plant sterol in their fatty acid ester form without negative effects on the sensory properties of the products. Furthermore, the fat-like physical properties of sterol fatty acid esters make it technically feasible to use them in the production of sterol enriched food products, irrespective of the food matrices used. By enriching the food product with desired levels of plant sterol the cholesterol lowering effect of the food product can easily be optimised.

Various methods for esterifying sterols, as well as stanols, the hydrogenated form thereof, have been proposed. Many of these utilise chemical reagents that cannot be accepted in the production of sterol fatty acid esters to be used in food applications. Such reagents may for instance include food grade incompatible moieties, such as acid chlorides, anhydrides or organic solvents.

US 3 751 569 suggests adding plant sterol fatty acid esters in cooking oil with the objective of lowering the serum cholesterol levels in man. The sterol fatty acid ester is prepared by esterification of free sterols with fatty acid anhydride, with perchloric acid acting as catalyst. The catalyst and anhydride reagent cannot be accepted in a food grade process.

GB 1 405 346 suggests conversion of free sterols in vegetable oil into their corresponding fatty acid esters, in order to produce a clear oil. Thereby a fatty acid ester of a monohydric aliphatic alcohol C1-4 is mixed to the oil. The fatty acid ester has been prepared in a separate process. The mixture of free sterols and fatty acid ester is esterified in the oil at elevated temperature in the presence of e.g. an alkali metal alcoholate catalyst. Monohydric alcohol, such as methanol, is liberated and has to be continuously removed in order to accelerate the esterification reaction. This method uses an excess of fatty acid ester, and the method produces an interesterified oil containing sterol esters.

US 5 502 045 suggests the use of e.g. sitostanol fatty acid esters to lower cholesterol levels in serum. The esters can be used as such or they can be added to foods. The stanol fatty acid ester is prepared by an esterification technique of a mixture containing a free crystalline stanol component and a fatty acid ester, such as fatty acid methyl ester, or a fatty acid ester mixture component. A catalyst, such as Na-ethylate, is needed for the esterification reaction. The catalyst may be destroyed after the esterification by adding water to the mixture.

WO 02/055639 suggests a process for preparation of a fat composition containing sterol esters, prepared in a one pot direct esterification of sterol with triglyceride. Thereby at a high temperature a sterol raw material is mixed with and dissolved in a triglyceride. An alkaline catalyst is added and esterification is allowed to take place. The catalyst is neutralised by the addition of acid and the fat composition obtained is purified. The fat composition prepared does obviously besides sterol fatty acid ester include rather high amounts of other components, such as free sterol, unreacted triglycerides, diglycerides and monoglycerides.

WO 02/060916 suggests a method for the production of a sterol ester-rich composition by esterification of sterols with fatty acyl glyceride from vegetable oil in the presence of an alkali catalyst. Following the esterification the reaction mixture is distilled to remove glycerol to enhance the formation of sterol esters. An acid is added to the reaction mixture to render the alkali catalyst inactive. Thereafter a sterol ester-rich fraction is isolated from the reaction mixture using organic solvents in combination with aqueous washes. In the reaction a significant stoichiometric excess of fatty acid acyl groups is needed in most cases. A complete, 100 %, product formation is not aimed at. The sterol ester-rich composition produced includes, besides sterol esters, considerable amounts of mono-, di- and triglycerides, as well as free sterol.

US 2002/0082434 A discloses a process for producing free sterols starting from an oil distillation residue typically containing partial glycerides and 10 to 12% by weight sterol esters. This publication sets forth that in order to be able to obtain sterols in pure form they have to be converted from the esterified to the free state. The process comprises transesterifying the partial glycerides with a lower alcohol in the presence of a basic catalyst to form fatty acid alkyl esters and glycerol, removing excess lower alcohol, the basic catalyst, the glycerol and the fatty acid alkyl esters, to form a product comprising the sterol esters, and then transesterifying the sterol esters to form free sterols. According to this publication the yield of sterols is about 40% based on the total sterol content of the oil distillation residue, and the sterol yield can be increased to over 50% by recycling the mother liquid.

WO 01/72136 A discloses sterol ester compositions having fatty acid moieties comprising more than 50% monounsaturated fatty acids, and a method for preparing the sterol ester composition comprising subjecting a sterol ester mixture to a fractionation process. The sterol ester mixture can be produced by esterifying a fatty acid mixture with free sterol by a direct esterification method or by esterifying an alcohol ester of a fatty acid mixture with free sterol in the presence of an interesterification catalyst.

WO 03/022064 A discloses steryl ester compositions wherein the ester moiety is a blend of fatty acids that include at least 80% oleic acid, and a method for producing the steryl ester comprising transesterifying a blend of fatty acid esters and a phytosterol to produce said steryl ester.

EP-A-1 179 536 discloses a process for recovering sterols from a residue obtained in the production of fatty acids, comprising esterifying free fatty acids present in the residue with an alcohol, and thereafter transesterifying the obtained partial glycerides with a lower alcohol in the presence of a basic catalyst to form fatty acid alkyl esters and glycerol, removing excess lower alcohol, the basic catalyst and the glycerol and removing the fatty acid alkyl esters by distillation to form a bottom product containing sterol esters, and then transesterifying the sterol esters to form free sterols and fatty acid esters. After further purification treatments, the sterols are eventually crystallized.

WO 97/21697 A discloses a process for recovering tocopherols from a mixture comprising tocopherols, fatty acids, fatty acid glycerides, sterols and sterol esters. A preferred starting material is an oil deodorizer product. The process comprises esterifying free fatty acids present in the tocopherol mixture and transesterifying fatty acid glycerides present in the tocopherol mixture with a lower alcohol in the presence of a zinc catalyst, removing excess lower alcohol, and the glycerol and the catalyst, and then removing alkyl fatty acid ester by distillation to obtain a highly concentrated tocopherol/sterol mixture. The tocopherol and sterol can be separated from one another. If complete conversion of sterol esters in the tocopherol mixture to free sterols is desired, the product is transesterified in the presence of an alkoxide catalyst.

The known methods for producing sterol fatty acid esters seem to lack in efficiency of the conversion processes. For optimal results more than stoichiometric amounts of fatty acid triglycerides or expensive pre-prepared fatty acid esters are used in the esterification process. In most processes a final product is achieved which contains besides sterol fatty acid esters rather high amounts of unreacted components, such as mono-, di- and/or triglycerides, as well as unreacted free sterols. These have to be removed in separate processes in order to get a pure sterol fatty acid ester. In some prior art processes reagents or catalysts are utilised that cannot be accepted in food preparing processes.

Due to the huge commercial interest in plant sterol fatty acid esters there are obvious needs for cost effective esterification processes that can be used to efficiently produce pure sterol fatty acid ester from vegetable oils or fats. Glycerol and catalyst should be easy to separate from the product. Also it should preferably be possible to carry out the process with existing equipment used for esterification of edible oils and fats.

### SUMMARY OF THE INVENTION

The invention relates to a process for the production of a sterol fatty acid ester-rich composition. A sterol composition, a fatty acid glyceride composition and an esterification catalyst is combined to form a reaction mixture. Esterification of sterol(s) takes place in the mixture, providing sterol fatty acid ester(s), glycerol and glycerides. A hydrolysing and alkylating composition is added to the mixture to hydrolyse glycerides present therein and to produce corresponding fatty acid alkyl ester(s) and glycerol. Glycerol is separated from the process. The sterol fatty acid ester containing mixture is purified by separating fatty acid alkyl ester therefrom, thereby providing a sterol fatty acid ester-rich composition. The fatty acid alkyl ester may be recycled into the esterification step in the beginning of the process.

It is an object of the present invention to provide an improved process for the production of a sterol fatty acid ester-rich composition, in which process the above mentioned disadvantages have been minimised.

It is thereby an object of the present invention to provide an efficient process for the production of a sterol fatty acid ester-rich composition, in which the content of free sterols, as well as mono-, di- and triglycerides is minimised.

It is further an object of the present invention to provide an efficient process for the production of a sterol fatty acid ester-rich composition with a minimal, in practice stoichiometric or almost stoichiometric, glyceride feed.

It is furthermore an object of the present invention to provide a process for the production of a sterol fatty acid ester-rich composition in which by-products and catalysts are separated easily from the sterol ester-rich composition.

It is still further an object of the present invention to provide an efficient and rapid process for the production of a sterol fatty acid ester-rich composition.

It is also an object of the present invention to provide an improved method, for the preparation of a fatty acid alkyl ester component in a mixture comprising at least a glyceride component and a sterol fatty acid ester component, while preventing or minimising the hydrolysis of the sterol fatty acid ester component.

It is then also an object of the present invention to provide a process for the production of a sterol fatty acid ester-rich composition, which process makes possible the preparation of a fatty acid alkyl ester component, participating in the sterol esterification, within the process itself.

It is additionally an object of the present invention to provide a process for the production of a sterol fatty acid ester-rich composition, in which reagents and catalysts are used, which are accepted in food grade processes.

It is still an object of the present invention to provide a process wherein there is no need to form an oil-water phase system, which would lead to increased losses of reactants and/or sterol fatty acid ester(s) because of emulsion formation.

A further object of the present invention is to provide a method for recovering food-grade sterol ester(s) from a fat mixture, such as waste fat, in pure form and in high yields.

In order to fulfil the above objects, a method and a process according to the present invention are characterised by what is disclosed in the appended independent claims.

In a first aspect of the present invention a typical process for the production of a sterol fatty acid ester-rich composition includes following two main reaction steps:
- a first step, including esterification of sterol components in a reaction mixture including glyceride and fatty acid alkyl ester components for the formation of sterol fatty acid ester(s), i.e. for the formation of one or more sterol fatty acid esters, and
- a subsequent second step, including hydrolysation of glycerides still present in the reaction mixture and an esterification of fatty acid components thus formed for the formation of fatty acid alkyl ester(s), i.e. for the ester formation of one or more fatty acid with one or more alkyl, and
- if desired, recycling of at least a portion of the fatty acid alkyl ester(s) formed into the reaction mixture in the first step.

In a second aspect of the present invention a typical method for recovering food-grade sterol fatty acid ester(s) from a fat mixture containing fatty acid glycerides and sterol fatty acid ester(s), comprises the steps of:
(i) adding to said fat mixture a hydrolysation catalyst and an alkylating component to hydrolyse the glycerides and to produce corresponding fatty acid alkyl ester(s), without significant hydrolysation of the sterol fatty acid ester(s),
(ii) removing excess alkylating component, the hydrolysation catalyst and glycerol,
(iii) purifying the obtained product by washing with water and/or by an adsorbent treatment or by washing with an acid aqueous solution and/or by an adsorbent treatment, and
(iv) purifying the obtained product by deodorisation to remove the fatty acid alkyl ester(s) and impurities and to produce pure sterol fatty acid ester(s).

Said fat mixture is preferably waste fat originating from the production of dietary products containing sterol fatty acid esters, including side fractions obtained in the processing of the fat products. Said waste fat can be obtained as such or separated from W/O or O/W emulsions obtained in the production of the dietary products. Typical dietary products are margarines, dressings (including salad dressings and mayonnaises), vegetable oils and cooking oils. In these products the fatty acid glycerides are mainly triglycerides, but also mono- and diglycerides may be present.

Typically said waste fat can be obtained from an emulsion by heating the emulsion and adding thereto an acid, such as phosphoric acid, to form a fat phase and an aqueous phase, and then separating and purifying the fat phase by adding an alkali, such as NaOH, to neutralise the fat phase, and subsequently washing with water to remove excess alkali and adsorbing impurity residues on an adsorbent material under vacuum in a bleaching process.

The fat mixture, before adding the hydrolysation catalyst and the alkylating component, contains preferably 1-99 %, more preferably 30-97 %, and most preferably 70-95 % by weight glycerides and preferably 1-99 %, more preferably 3-70 %, and most preferably 5-30 % by weight sterol fatty acid ester(s).

The hydrolysation catalyst is typically chosen from the group of bases comprising alkali hydroxides, such as KOH and/or NaOH, and alkali oxides.

The alkylating component is typically chosen from the group of lower alcohols comprising C1-4 alkanols, preferably methanol and/or ethanol.

The reaction mixture typically contains 0.01-10 %, preferably 0.05-2 %, by weight of the hydrolysation catalyst.

The reaction mixture typically contains 0.01-75 %, preferably 0.1-30 %, more preferably 0.5-30 %, by weight of the alkylating component.

Typically the hydrolysation catalyst and the alkylating component are added to the mixture as a pre-prepared hydrolysing and alkylating composition. Preferably the hydrolysation catalyst is KOH and the alkylating component is methanol. More preferably these components are added as a pre-prepared metanolic KOH composition.

The hydrolysing and alkylating composition or its components typically comprise at least 50 % by weight methanol and at most 50 % by weight KOH, preferably 65-99,5 %, more preferably 80-99 %, most preferably 85-95 % by weight of methanol and preferably 0.5-35 %, more preferably 1-20 %, most preferably 5-15 % by weight of KOH.

The temperature of the mixture is preferably maintained at a temperature between 60-100 °C, more preferably at a temperature between 60-80 °C, for a period of from 1 minute to 6 hours, preferably from 30 minutes to 2 hours. The pressure is maintained at vacuum pressure of at most 100 kPa, preferably at most 7 kPa.

In step (ii) the removing of excess alkylating component, the hydrolysation catalyst and glycerol is conveniently carried out by separating the formed two phases from each other, for example by decanting. It is also possible to separate the excess alkylating component (such as methanol) by distillation after the separation of the catalyst.

After step (ii) the product is purified by washing with water and/or by an adsorbent treatment or by washing with an acid solution and/or by an adsorbent treatment (step (iii)). This treatment removes any residues of the catalyst. The adsorbent treatment is normally followed by filtration and this treatment is also referred to as bleaching.

The deodorisation in step (iv) is carried out by steam distillation preferably at a temperature of between 160-230 °C, more preferably 190-210 °C, and preferably at a pressure of 1-1000 Pa, more preferably 50-500 Pa. This treatment removes the fatty acid alkyl ester and also impurities, such as taste and odor components.

The obtained sterol fatty acid ester(s) are pure and typically have a purity of at least 90 % by weight, preferably at least 94 % by weight, and most preferably at least 97 % by weight. The recovery of the sterol fatty acid ester(s) is at least 75 % by weight, preferably at least 90 % by weight based on the sterol fatty acid ester(s) content of the fat mixture.

The sterol fatty acid ester(s) recovered by the method of the present invention can, if desired, be further purified, and reused in the production of dietary or other products.

The fatty acid alkyl esters obtained as the distillate in the deodorisation step can be utilized as part of the FaMe feed of the process for the production of a sterol fatty acid ester-rich composition described in more detail in the following.

In the present description and claims "hydrolysation" means converting the fatty acid glycerides at least partially into the corresponding fatty acids and glycerol. The term "hydrolysation" is used although no water is present, as is common within this field.

In the present description of the invention, as well as in appending claims the term "sterol" means, unless otherwise stated, sterol and its hydrogenated congener stanol or a mixture of these. The term sterol includes in its broadest form, besides various plant sterols and plant stanols, also cholesterol, which is an animal sterol and which may be used e.g. in cosmetic applications. Preferably the sterol composition used in the process is rich in sterol raw material selected from the group consisting of 4-desmethyl sterols, 4-desmethyl stanols, 4-monomethyl sterols, 4-monomethyl stanols, 4,4-dimethyl sterols and 4,4-dimethyl stanols and mixtures of these. Most typically 4-desmethyl sterols and/or 4-desmethyl stanols are used.

In the present description of the invention, as well as in appending claims the term sterol fatty acid ester-rich composition, produced by the present new process, means, unless otherwise stated, a composition including at least 90 %, more typically at least 94 %, most typically at least 97 % by weight sterol fatty acid ester(s).

In the present description the term "esterification" of sterol components includes interesterification of sterol components with fatty acid components of glycerides present in the reaction mixture and/or transesterification of sterol components with fatty acid derivatives present in the reaction mixture.

### DETAILED DESCRIPTION OF THE INVENTION

In a typical process constituting the first aspect of the present invention, the first step, i.e. the first esterification step, will take place in a reaction mixture including the following components fed into a reaction vessel:
- a sterol composition, comprising one or more sterols;
- a glyceride composition, comprising one or more glycerol fatty acid esters of one to three same or different fatty acids and
- a fatty acid alkyl ester composition, comprising one or more fatty acid lower alkyl esters.

A typical mixture would include, in mol ratio, about 1 mol of sterol(s), about 0.3-0.7 mol of glyceride(s) and about 0.9-2.1 mol of (recycled) fatty acid alkyl ester(s).

As will be shown later, it may not always be necessary to include in the mixture, at the very initial starting phase of the process, a fatty acid alkyl ester composition. A stoichiometric excess of glyceride may compensate for the absence of the fatty acid alkyl ester at the initial phase. In the continued run of the process fatty acid alkyl ester will be formed in the process itself and recycled to the beginning of the process to form the above mixture.

Typically the mixture is dried and the sterol components dissolved by increasing the temperature of the mixture. The pressure in the vessel may be decreased to enable separation of the water separated from the mixture. Alternatively or in addition, the compositions of the mixture may be dried and dissolved separately before combining them into a mixture.

A catalyst, such as NaOCH3 is fed into the reaction vessel in order to bring about the first esterification reactions in the process, i.e. to bring about the esterification reactions between sterol components present in the sterol composition and fatty acid components present in the glyceride and fatty acid alkyl ester compositions fed into the reaction vessel. Thus, in the esterification reactions of the first step, sterol fatty acid ester(s), partial glycerides and glycerol are formed.

After the esterification reactions, in the first step, have reached a desired conversion level, such as at least 90 %, typically at least 94 %, more typically at least 98 %, conversion, the thus reacted mixture typically contains, besides the sterol fatty acid ester(s) and glycerol formed, possible unreacted sterol components and partly and/or totally unreacted glycerides, i.e. mono-, di- and/or triglycerides, as well as fatty acid alkyl ester(s) and catalyst.

After the esterification, the reaction mixture typically contains at most 50 %, preferably 1-30 %, by weight glycerides, and at least 50 %, preferably 70-99 %, by weight sterol fatty acid ester(s).

Thereafter in a typical process utilising the present invention, the second step, i.e. the hydrolysation of glycerides and the esterification of fatty acid components thus formed, will take place in the reacted mixture, in the same or another reaction vessel.

A hydrolysation catalyst, preferably an alkali catalyst, such as KOH or NaOH, is fed into the reacted mixture in order to bring about hydrolysation of glycerides therein.

In the second step, the hydrolysation catalyst itself, the amount of catalyst used and the reaction conditions, such as time and temperature, are chosen so as not to, at least not significantly, hydrolyse the sterol fatty acid ester(s) present in the reacted mixture, while still hydrolysing the glycerides in a suitable manner. The conditions are chosen so as to achieve an as complete as possible hydrolysation of mono-, di- and triglycerides, while simultaneously avoiding formation of free sterols.

An alkylating component is fed into the reaction vessel in order to provide the alkyl component needed for the esterification, i.e. the alkylation, of fatty acid components formed by the hydrolysation of glycerides. The alkylating component is preferably fed into the vessel simultaneously with the hydrolysation catalyst, the catalyst thereby typically being dissolved in the alkylating component. Typically the alkylating component is a lower alkyl alcohol, such as methanol or ethanol leading to methylation or ethylation of the fatty acid components.

Thus in the second step of the present process glycerides, present in the reacted mixture formed in the first step, are hydrolysed to form fatty acid components and glycerol. And the fatty acid components thus formed are esterified, in a second esterification reaction of the present new process, to form corresponding fatty acid alkyl ester(s).

Glycerol formed in the first esterification reactions and in the hydrolysation reactions is typically gathered as a separate glycerol phase at the bottom of the reaction vessel(s) and may then be easily removed therefrom. Catalyst(s) used in the esterification and hydrolysation processes, e.g. NaOCH3 in the first step and KOH or NaOH in the second step, typically gathers in the glycerol phase and may be efficiently removed from the process together with the glycerol, e.g. by draining.

After the second esterification, i.e. the alkylation, reaction has reached a desired conversion level and the glycerol and the catalysts have been removed, the remaining mixture contains, besides the sterol fatty acid ester(s), mainly fatty acid alkyl ester(s), as well as possible, typically minor, amounts of unreacted reagents, intermediate products and impurities. The fatty acid alkyl ester and unreacted reagents, such as free sterols, may separately be separated, e.g. by distillation, from the produced sterol fatty acid ester containing mixture. The fatty acid alkyl ester is typically at least partly recycled to the beginning or the process, to be included in the reaction mixture.

The present invention utilises the finding that incompletely reacted mono- and diglycerides, as well as unreacted triglycerides, still present in the process after the first reaction step, i.e. after having reached the chosen conversion level of the first esterification reactions between sterol and glyceride components, may be hydrolysed in a second reaction step without significantly hydrolysing the sterol fatty acid ester(s) formed. Typically at most 20 %, more typically at most 10 %, most typically at most 5 % of the sterol fatty acid ester(s) are hydrolysed. Of the glycerides typically at least 90 %, more typically at least 95 %, most typically at least 98 % is hydrolysed. Hydrolysation of glycerides provides reactive fatty acids, which are simultaneously esterified with lower alcohols so as to form fatty acid alkyl esters that may be recycled to the first reaction step to provide an excess of reactive fatty acid derivatives into the esterification of sterol(s). The excess of fatty acid ester(s) enables optimal conversion levels in the esterification of sterols even if only about a stoichiometric input of "virgin" or "new" fatty acid components, in glyceride form, is provided in a continuous process or repeated batch process.

The optimal conversion of sterol(s) minimises the free sterol content in the final sterol fatty acid ester product. The hydrolysation of glycerides, on the other hand, minimises the amount of mono-, di- and triglycerides in the final sterol fatty acid ester product. Thus a pure sterol fatty acid ester-rich product is achieved. The composition of the feed into the reactor vessel in the first step allows for high sterol conversion in relatively short reaction times.

Therefore in a continuous process or repeated batch process for the production of a sterol fatty acid ester-rich composition, according to the present invention, an input of only about stoichiometric amounts of sterol and glyceride is typically needed. Simultaneously fatty acid alkyl ester is preferably continuously recycled, as described above, within the process.

During normal steady state conditions normally no continuous input of external fatty acid alkyl ester is recommended. However, at the very initial stage of the process, i.e. before any fatty acid alkyl ester component has been formed in the process, a small input of separately prepared external fatty acid alkyl ester may be needed. Alternatively an excess of glyceride may be fed into the system during the initial stage of the process so as to provide an excess amount of fatty acid derivatives needed in the first esterification reactions and the glycerides needed in the hydrolysation/esterification reactions.

Alternatively, as explained previously the fatty acid alkyl esters obtained from the deodorisation step of the method for recovering sterol fatty acid ester(s) can be fed into the above process.

The process according to the invention may be performed as a batch process in one single vessel or in two or more consecutive vessels. Alternatively, the process may be performed as a continuous process.

Purification, such as bleaching (i.e. an adsorbent treatment) and/or filtration, of the sterol fatty acid ester and fatty acid alkyl ester produced may be performed in any suitable manner known per se within the reaction vessel itself or in any separate equipment.

Preferably the purification of the sterol fatty acid ester containing mixture includes bleaching, filtration and/or deodorisation.

The present new process may be applied in the esterification of a wide variety of sterols. Both plant sterols and animal sterols may be esterified to provide desired sterol fatty acid ester-rich compositions for use in food, pharmaceutical and cosmetic applications.

The sterol composition used in a process according to the present invention may thereby be obtained from one or more natural oils or fats, such as vegetable, fungal or animal oils or fats, or their mixtures. Typically sterol components obtained from the preparation processed of one or more of the following plant or vegetable oils or fats are used: tall oil, rapeseed oil, soy bean oil, wheat germ oil, rice bran oil, corn fiber oil, sunflower oil, safflower oil, corn oil and olive oil.

The sterol composition used in the process typically includes one or more sterol components chosen from the group consisting of sitosterol, sitostanol, campesterol, campestanol, stigmasterol, brassicasterol, dihydrobrassicasterol, taraxasterol, clionasterol, cholesterol, suitable derivatives and reduction products of the foregoing, and mixtures of these.

The present invention makes possible the use of a variety of fatty acid components, including particular fatty acid components that would not ordinarily be available as such on the market or, if available, would render a rather high price. These particular fatty acid components may, however, be present in glycerides available on the market and thus available for the present process.

Glyceride compositions applicable in processes according to the present invention comprise a glycerol fatty acid ester of one to three same or different fatty acids. Typically the glyceride composition comprises a main triglyceride component and possible minor amounts of mono- and/or diglycerides.

The glyceride composition may comprise saturated and/or unsaturated C4-C28 fatty acid esters of glycerol, preferably C16-C22 fatty acid esters of glycerol, most preferably C16-C18 fatty acid esters of glycerol. The acids may be saturated or mono-, di- or polyunsaturated.

The glyceride component may be selected from different types of glycerides, such as glycerides derived from plant, animal, synthetic or fungal oils or fats, such as vegetable oils and fish oils. The oils or fats may be partially or fully hydrogenated or may include a fatty acid with an otherwise modified composition.

Typically, however, a glyceride composition comprising one or more fatty acid glyceride components selected from a group of glycerides derivable from vegetable oils or fats is used. Thus glycerides of soybean, rapeseed, sunflower, corn, wheat, rice, safflower, olive, cottonseed, linseed, flaxseed, sesame, peanut, almond, palm and coconut oil or fat, and mixtures of these, may be used.

Various known suitable esterification catalysts may be used in the esterification of the sterol component. The esterification catalyst may preferably be chosen from the group comprising metal alkoxides, such as NaOCH3 or NaOC2H5, alkali hydroxides, metal oxides, metal soaps, metal alloys, metal hydrides, metal amides and/or their mixtures. The amount of catalyst needed in the esterification reactions depends on the catalyst composition, as well as on process conditions. Sodium methoxide, i.e. NaOCH3, has proven a very suitable catalyst. Typically an amount of about 0.3-1 % by weight, more typically 0.5-0.8 % by weight NaOCH3 catalyst calculated on the amount of sterol is needed for a good esterification result. The catalyst may be introduced into the reaction vessel together with the sterol composition and/or the glyceride composition, or it may be introduced into the vessel separately. Sodium methoxide can easily be removed from the process together with glycerol.

Various known hydrolysation catalysts may be used to activate the hydrolysation of glycerides in the second step of the present process. By choice of catalyst and process conditions, care should, however, be taken not to activate a hydrolysation of sterol fatty acid esters also present in the reacted mixture. Different bases, such as alkali hydroxides or alkali oxides may be used. Advantageously KOH and/or NaOH, preferably KOH is used to activate the hydrolysation.

About 0.01-10 % by weight of hydrolysation catalyst calculated on the amount of reaction mixture is typically needed to activate the hydrolysation properly. Preferably 0.05-2 % hydrolysation catalyst is used.

An alkylating component is added to the reacted mixture to esterify the fatty acid(s) formed by the hydrolysation. The alkylating component is preferably a lower alcohol (e.g. C1-4 alkanol), more preferably methanol or ethanol, most typically methanol. The hydrolysation catalyst is typically dissolved in the alkylating component before adding the catalyst and the alkylating component as a combined hydrolysating and alkylating composition into the reacted mixture from the first step.

About 0.01-75 % by weight of alkylating component calculated on the reaction mixture is typically added to facilitate the alkylation. Preferably the added amount is 0.1-30 %, more preferably 0.5-30 %.

A combined hydrolysating and alkylating composition, comprising KOH and methanol typically includes at least 50 % by weight methanol and at most 50 % by weight KOH, preferably 65-99.5 %, more preferably 80-99 %, most preferably 85-95 % by weight of methanol and preferably 0.5-35 %, more preferably 1-20 %, most preferably 5-15 % by weight of KOH. These components may also be added separately in corresponding amounts.

Preferably the hydrolysation catalyst and the alkylating component are added to the sterol fatty acid ester containing mixture when the esterification reactions of the first reaction step are complete or mainly complete.

Process conditions, such as temperature, vacuum, pressure and/or time, may be used to control the reactions taking place in the first and second process steps.

Before the actual esterification reactions take place between the sterol component(s) and glyceride component(s) the reagents are preferably dried at high temperature and under vacuum. The temperature of the components is typically elevated to above 100 °C, typically to between 110-130 °C. Preferably a vacuum of less than 7 kPa is used to remove water.

The actual esterification between sterol and glyceride/fatty acid alkyl ester components is typically performed at high temperature and under vacuum. The temperature is kept between 100-200 °C, typically between 100-160 °C, more typically between 115-145 °C. Vacuum level is kept between 2-100 kPa, typically below 7 kPa. Esterification normally takes about 0.1-10 hours, typically 1-3 hours, most typically about 2 hours, depending on reagents and catalyst used, as well as on temperature, vacuum levels and desired level of reaction conversion.

The hydrolysation of glycerides is performed at a temperature, which typically is lower than the above mentioned esterification temperatures, typically between 60-100 °C, more typically between 60-80 °C. The hydrolysation is maintained for 1 minute to 6 hours, typically 0.5-2 hours. Hydrolysation at 80 °C may thus be continued for 0.1-2 hours, typically 30 minutes.

After hydrolysation and alkylation the fatty acid alkyl ester formed may be separated from the sterol fatty acid ester-containing mixture by distillation or in a so-called deodorisation stage, by steam distillation. The fatty acid alkyl ester is thereby typically separated from the sterol ester by high vacuum stripping at temperatures between 160-240 °C, more preferably 190-210 °C, and preferably at pressures of 1-1000 Pa, more preferably 50-500 Pa. This treatment removes the fatty acid alkyl ester and also impurities, such as taste and odor components, especially when using deodorisation. The process may take from a few minutes to a few hours, depending on process conditions.

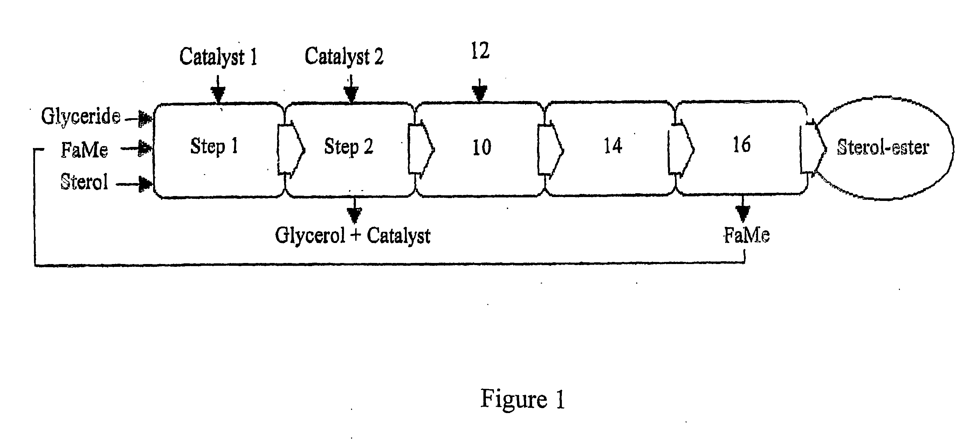

The present invention will be more readily understood from the following description of an exemplary process utilising the present invention, as shown in Figure 1 schematically showing the process steps. The consecutive process steps may be performed in distinctly separate reaction vessels or in a single elongated vessel being divided in consecutive separate reaction zones, still allowing a reaction mixture to flow through the vessel. The figure depicts a batch process.

An external feed of a glyceride composition, such as a refined bleached and deodorised triglyceride, and a sterol composition, such as a sterol rich in 4-desmethyl sterols, as well as a recycled feed of fatty acid alkyl ester FaMe is fed into the first stage, Step 1, to form a mixture therein. A first catalyst, Catalyst 1, such as NaOCH3, is fed into the mixture and the mixture temperature is raised to the reaction temperature level to start esterification of the sterol composition.

Esterification reactions result in the formation of sterol fatty acid ester(s), i.e. the Sterol-ester product, and glycerol, as well as some only partly reacted mono- and diglycerides and methanol. Thus a reacted mixture moving from Step 1 to the second stage, Step 2, will normally contain besides significant amounts of sterol fatty acid esters and glycerol formed and possible minor amounts of unreacted free sterols and triglycerides, some partly reacted mono- and diglycerides. The methanol is removed by vacuum. The removed methanol may also be reused by recycling it into the second stage of the process.

In the second stage, Step 2, a second catalyst, Catalyst 2, including a hydrolysation catalyst, such as KOH, and an alkylating component, such as methanol, is added to the reacted mixture and the temperature of the reacted mixture is set to the second reaction temperature level to start hydrolysation and alkylation. In Step 2 mono-, di- and triglycerides in the reacted mixture are hydrolysed to form fatty acids and more glycerol. Glycerol, which contains catalyst residue, as well as other impurities, may be continuously drained from Step 2 to enhance reactions. The free fatty acids formed react with the alkylating component, which results in the formation of fatty acid alkyl esters.

From Step 2 the reacted mixture, now mainly containing sterol fatty acid ester(s) and fatty acid alkyl ester(s), is conveyed to purification treatment(s) considered necessary in each particular case. The purification may include, as shown in the figure, a bleaching step10, a filtration step 14 and a deodorisation step 16, known per se. All these steps may not always be necessary. In some applications other cleaning steps known per se may be used. The cleaning steps may need the addition of some cleaning aid, such as adsorbent 12 added into the mixture in the bleaching step 10.

The deodorisation step 16 may include distillation or stripping of fatty acid alkyl ester at 160-240 °C from the sterol fatty acid ester to form a sterol fatty acid ester-rich composition, which contains a high amount of sterol ester(s), typically at least 90 %, more typically at least 94 %, most typically at least 97 % by weight sterol fatty acid ester(s) and a low amount of free sterol(s), typically at most 10 %, more typically at most 6 %, most typically at most 3 % by weight free sterols. The composition contains a low amount of total glycerides, typically less than 2 % triglycerides, more typically less than 1 % by weight triglycerides.

The present invention will be more readily understood from the following examples. The examples are intended to illustrate the present invention, not to limit the invention. In this specification unless otherwise stated the percentages are given as % by weight.

### EXAMPLE 1

Stanol fatty acid esters where prepared in laboratory scale by carrying out esterification reactions in a mixture comprising rapeseed oil, plant stanol and rapeseed oil-based methyl ester.

Plant stanol, having a composition of 68.2 % sitostanol, 28.3 % campestanol, 1.1 % sitosterol and trace amounts of unsaturated sterols, was prepared by hydrogenation of commercially available plant sterol. One mol of the thus prepared plant stanol was mixed with 0.33 mol of rapeseed oil and 1 mol of rapeseed oil-based methyl ester. The mixture was dried at 110-120°C and at vacuum below 7 kPa.

The temperature of the thus dried mixture was reduced to 90 - 95 °C. Sodium methoxide catalyst in an amount of 0.8 % by weight of total sterol/stanol, was added to the mixture. The temperature of the thus formed reaction mixture was increased to 120 °C and the esterification was carried out under vacuum for a relatively short period, i.e. for 2 hours. The conversion, of stanol and glyceride to stanol fatty acid ester and glycerol in the presence of excess fatty acid methyl ester, was monitored by gas chromatographic (GC) analysis. Once final (> 90 %) conversion was achieved, the temperature was reduced to 80 °C (product of Step 1).

Thereafter 5 % by weight of a catalyst, including 11 g KOH in 89 g methanol, was added to the esterified reaction mixture to hydrolyse glycerides, i.e. tri-, di- and monoglycerides, still present in the mixture and form fatty acid methyl esters and more glycerol.

Glycerol and catalyst residues settled on the bottom of the reactor were decanted out of the reactor. After hydrolysation of glycerides and catalyst removal, the mixture was dried at 95 °C under vacuum. The thus dried material was bleached using 1 % by weight adsorbing aid (Trisyl®, Grace, Germany) for 20 minutes at 95 °C and vacuum below 7 kPa, for removing catalyst residues, metal and color compounds. After removal, by filtration, of the adsorbing aid, standard laboratory scale evaporation, in a thin film evaporator, was carried out to remove the excess of fatty acid methyl esters and provide a stanol fatty acid ester-rich product. The fatty acid methyl ester distillate was to be recycled and reused as raw material in the process. The concentrations of obtained stanol fatty acid ester, free sterol, glycerides and fatty acid methyl ester were analysed in the intermediate product after Step 1 and in the stanol fatty acid ester-rich product.

The results were:

| Analysis | product of Step 1 % by weight | purified product % by weight |
|---|---|---|
| Free sterols/stanols | 1.7 | 4.8 |
| Stanol fatty acid esters | 66.3 | 94.6 |
| Monoglycerides | - | - |
| Diglycerides | 10.2 | - |
| Triglycerides | 14.3 | < 0.5 |
| Free fatty acid methyl ester | 7.5 | |

The results show approximately 25 % unreacted glycerides in the intermediate product but only traces in the final product.

### EXAMPLE 2

Two test runs for the preparation, in laboratory scale, of a stanol fatty acid ester-rich product where performed. Thereby in a reaction vessel a reaction mixture, containing 0.33 mol rapeseed oil (RO), 1 mol stanol (STA) and 1 mol rapeseed oil-based methyl ester (ROMe), was mixed with 0.6-0.8 % by weight NaOCH3 catalyst calculated on the amount of stanol. The reaction mixture was esterified.

Thereafter the mixture was hydrolysed and alkylated by adding into the reaction vessel 5 % by weight of a hydrolysing and alkylating composition, comprising 89 % methanol and 11 % KOH. The hydrolysation, which took place at atmospheric pressure and 80°C, took approx. 30 minutes. Glycerol phase formed settled at the bottom of the reaction vessel and was removed. Fatty acid methyl ester (FaMe) was distilled from the mixture. Fatty acid methyl ester thus separated from the mixture in the first test run was recycled and used as the fatty acid methyl ester feed (FaMe) instead of rapeseed oil (ROMe) in the second test run. Otherwise the second run was performed in the same way as the first run. The stanol fatty acid ester (STAEST) yield was measured.

| Results | | First run | Second run |
|---|---|---|---|
| Feed STA | g | 199 | 199 |
| Feed RO | g | 146 | 146 |
| Feed ROMe | g | 148 | |
| Feed FaMe | g | | 148 |
| Catalyst NaOCH3 | g | 1.5 | 1.5 |
| Methanol + KOH | g | 25 | 25 |
| Glycerol decanted | g | 42 | 39 |
| FaMe distillate | g | 153 | 122 |
| STAEST | g | 297 | 279 |

The stanol fatty acid ester-rich product produced was analysed. The results:

| Analysis | First run % by weight | Second run % by weight |
|---|---|---|
| Free sterols/stanols | 4.8 | 5.4 |
| Stanol fatty acid esters | 94.6 | 94.0 |
| Monoglycerides | - | - |
| Diglycerides | - | - |
| Triglycerides | < 0.5 | < 0.5 |

The Examples illustrate non-continuous processes. The process may, however, easily be utilised in a continuous process. Only a feed of a batch of fatty acid methyl ester or excess glyceride seems to be necessary at the beginning of the process. It is also believed that in the process the quality of the recycled fatty acid methyl ester remains good, due to the renewing effect of the process.

The present invention provides a simple and cost-effective food grade process for the esterification of sterol compositions with glyceride compositions to provide a sterol fatty acid ester-rich composition, in which the content of free sterols, as well as mono-, di- and triglycerides is minimised. Thus the present invention makes possible a surprisingly efficient use of fatty acid components present in glycerides, a minimised, in practice, about stoichiometric, glyceride feed is sufficient. The present invention also makes possible the use of a variety of fatty acid components, e.g. fatty acid components which would not ordinarily be available as such on the market or, if available, would render a rather high price, but which are present in glycerides available on the market. In a process utilising the present invention, there is no need to purchase or separately prepare the fatty acid or fatty acid alkyl ester components needed, as fatty acid alkyl ester components needed in the process may be derived from corresponding glyceride compositions introduced.

In a process utilising the present invention catalysts used in the esterification reactions gather in the glycerol phase and are thereby easily removed from the process. In prior known processes, on the other hand, catalysts have been inactivated by washing the reaction mixture with water. Such water treatment tends to cause emulsification of process liquids leading to various process problems. These problems are avoided in the new process.

### EXAMPLE 3

20000 g of a fat mixture containing 20 % by weight of sterol esters and 80 % of triglycerides was hydrolysed and alkylated in a pilot reactor with 3200 g of methanol in the presence of 400 g of potassium hydroxide. The reaction was carried out under mixing at 60 °C and normal atmosphere. After reaction time of 60 min the mixing was stopped and the heavy phase containing glycerol, catalyst and excess methanol was decanted after 60 min separation time. After heavy phase separation 5000 g of 90 °C water was added into the remaining sterol ester and fatty acid methyl ester mixture, and after 30 min separation time the wash water phase was removed by decanting. The wash was repeated second time. After washing the mixture was heated and treated under 50 mbar (5 kPa) vacuum at 95 °C with 0.4 % by weight of an adsorbent (Trisyl) to remove the residual catalyst. After 15 min contact time the adsorbent was removed by filtration and the mixture was deodorized by steam distillation at 200 °C under 1 mbar (0.1 kPa) vacuum to remove the excess methyl ester and taste and odor compounds. After 120 min deodorization time the remaining sterol ester was cooled and filtered at 60 °C. The deodorized sterol ester product was clear and the taste was bland.

## Claims

1. A process for the production of a sterol fatty acid ester-rich composition comprising the steps of:
(a) combining
- a sterol composition, comprising one or more sterols,
- a fatty acid glyceride composition, comprising fatty acid esters of one or more fatty acids, and
- an esterification catalyst to form a reaction mixture,
(b) performing esterification of sterol(s) in said reaction mixture to produce a sterol fatty acid ester containing mixture,
(c) adding a hydrolysation catalyst and an alkylating component to hydrolyse mono-, di- and/or triglycerides present therein and to produce corresponding fatty acid alkyl ester(s) and glycerol, and
(d) purifying the sterol fatty acid ester containing mixture to form a sterol fatty acid ester-rich composition.

2. The process according to claim 1, wherein to the reaction mixture or to its components in step (a) is added at least one fatty acid alkyl ester.

3. The process according to claim 1 or 2, wherein step (d) includes step (d1) comprising purifying said sterol fatty acid ester containing mixture by removing glycerol from said mixture.

4. The process according to claim 3, wherein in step (d1) the esterification catalyst and/or the hydrolysation catalyst is removed together with glycerol from the sterol fatty acid ester containing mixture.

5. The process according to any one of claims 1 to 4, wherein step (d) includes step (d2) comprising purifying said sterol fatty acid ester containing mixture by separating fatty acid alkyl ester from said mixture.

6. The process according to claim 5, comprising a further step of feeding fatty acid alkyl ester separated in step (d2) into the sterol composition, the fatty acid glyceride composition, the esterification catalyst and/or into the reaction mixture formed in step (a).

7. The process according to any one of claims 1 to 6, wherein the hydrolysation catalyst and the alkylating component are added in step (c) as a pre-prepared hydrolysing and alkylating composition.

8. The process according to any one of claims 1 to 7, wherein the hydrolysation catalyst is KOH and the alkylating component is methanol, preferably being added as a pre-prepared methanolic KOH composition.

9. The process according to any one of claims 1 to 8, wherein in step (a) the esterification catalyst is chosen from the group comprising metal alkoxides, such as NaOCH₃ and NaOC₂H₅, metal oxides, alkali hydroxides, metal soaps, metal alloys, metal hydrides, metal amides and their mixtures.

10. The process according to any one of claims 1 to 9, wherein the reaction mixture in step (c) comprises 0.01-10 % by weight, preferably 0.05-2 % by weight of the hydrolysation catalyst.

11. The process according to any one of claims 1 to 10, wherein the reaction mixture in step (c) comprises 0.01-75 % by weight, preferably 0.1-30 % by weight, most preferably 0.5-30 % by weight, of the alkylating component.

12. The process according to any one of claims 1 to 11, wherein the hydrolysing and alkylating composition or its separate components comprise at least 50 % methanol and at most 50 % KOH, preferably 65-99.5 %, more preferably 80-99 %, most preferably 85-95 % by weight of methanol and preferably 0.5-35 %, more preferably 1-20 %, most preferably 5-15 % by weight of KOH.

13. The process according to any one of claims 1 to 12, wherein step (d) includes the sterol fatty acid ester containing mixture being purified by bleaching, filtration and/or deodorisation.

14. The process according to any one of claims 1 to 13, wherein in step (a) the reaction mixture is formed by including in mol ratio 1 mol of one or more sterols, 0.3-0.7 mol of one or more fatty acid glycerides and 0.9-2.1 mol of one or more fatty acid methyl esters recycled from step (d2).

15. The process according to any one of claims 1 to 14, wherein the hydrolysation catalyst and the alkylating component are added to the sterol fatty acid ester containing mixture in step (c) when the esterification reactions are complete or mainly complete.

16. The process according to any one of claims 1 to 15, wherein the sterol fatty acid ester-rich composition produced comprises at least 90 %, preferably at least 94 %, more preferably at least 97 % by weight sterol fatty acid ester(s).

17. A method for recovering food-grade sterol fatty acid ester(s) from a fat mixture containing fatty acid glycerides and sterol fatty acid ester(s), comprising the steps of:
(i) adding to said fat mixture a hydrolysation catalyst and an alkylating component to hydrolyse the glycerides and to produce corresponding fatty acid alkyl ester(s), without significant hydrolysation of the sterol fatty acid ester(s),
(ii) removing excess alkylating component, the hydrolysation catalyst and glycerol,
(iii) purifying the obtained product by washing with water and/or by an adsorbent treatment or by washing or with an acid aqueous solution and/or by an adsorbent treatment, and
(iv) purifying the obtained product by deodorisation to remove the fatty acid alkyl ester(s) and impurities and to produce pure sterol fatty acid ester(s).

18. The method according to claim 17, wherein the hydrolysation catalyst is chosen from the group of bases comprising alkali hydroxides, such as KOH and/or NaOH, and alkali oxides.

19. The method according to claim 17 or 18, wherein the alkylating component is chosen from the group of lower alcohols comprising C1-4 alkanols, preferably methanol and/or ethanol.

20. The method according to any one of claims 17 to 19, wherein the fat mixture, before adding the hydrolysation catalyst and the alkylating component, contains 1-99 %, preferably 30-97 %, and more preferably 70-95 % by weight glycerides and 1-99 %, preferably 3-70 %, and more preferably 5-30 % by weight sterol fatty acid ester(s).

21. The method according to any one of claims 17 to 20, comprising adding to the fat mixture 0.01-10 %, preferably 0.05-2 %, by weight of the hydrolysation catalyst.

22. The method according to any one of claims 17 to 21, comprising adding to the fat mixture 0.01-75 %, preferably 0.1-30 %, more preferably 0.5-30 %, by weight of the alkylating component.

23. The method according to any of claims 17 to 22, comprising adding the hydrolysation catalyst and the alkylating component as a pre-prepared hydrolysing and alkylating composition.

24. The method according to any one of claims 17 to 23, wherein the hydrolysing and alkylating composition or its components include at least 50 % by weight methanol and at most 50 % by weight KOH, preferably 65-99.5 %, more preferably 80-99 %, most preferably 85-95 % by weight of methanol and preferably 0.5-35 %, more preferably 1-20 %, most preferably 5-15 % by weight of KOH.

25. The method according to any one of claims 17 to 24, wherein step (i) is carried out at a temperature between 60-100 °C, preferably between 60-80 °C, at a pressure of at most 100 kPa, preferably at most 7 kPa, and for a period of from 1 minute to 6 hours, preferably from 30 minutes to 2 hours.

26. The method according to any one of claims 17 to 25, wherein step (iv) is carried out at a temperature of between 160-230 °C, preferably 190-210 °C, and at a pressure of 1-1000 Pa, preferably 50-500 Pa.

## Patentansprüche

1. Ein Verfahren zur Herstellung einer an Sterolfettsäureester reichen Zusammensetzung, das die folgenden Schritte umfasst:
(a) Kombinieren
- einer Sterolzusammensetzung, die ein oder mehrere Sterole umfasst,
- einer Fettsäureglycerid-Zusammensetzung, die Fettsäureester einer oder mehrerer Fettsäuren umfasst, und
- eines Veresterungskatalysators zur Bildung einer Reaktionsmischung,
(b) Durchführen einer Veresterung von Sterolen in der Reaktionsmischung zur Herstellung einer Sterolfettsäureester enthaltenden Mischung,
(c) Zusetzen eines Hydrolysierungskatalysators und einer Alkylierungskomponente, um darin vorhandene Mono-, Di- und/oder Trigylceride zu hydrolysieren, und um entsprechende(n) Fettsäurealkylester und Glycerol herzustellen, und
(d) Reinigen der Sterolfettsäureester enthaltenden Mischung, um eine an Sterolfettsäureester reiche Zusammensetzung zu bilden.

2. Das Verfahren nach Anspruch 1 , wobei der Reaktionsmischung oder ihren Komponenten im Schritt (a) mindestens ein Fettsäurealkylester zugesetzt wird.

3. Das Verfahren nach Anspruch 1 oder 2, wobei Schritt (d) den Schritt (d1) umfasst, der das Reinigen der Sterolfettsäureester enthaltenden Mischung durch Entfernen von Glycerol aus der Mischung umfasst.

4. Das Verfahren nach Anspruch 3, wobei in Schritt (d1) der Veresterungskatalysator und/oder der Hydrolysierungskatalysator zusammen mit Glycerol aus der Sterolfettsäureester enthaltenden Mischung entfernt wird.

5. Das Verfahren nach einem der Ansprüche 1 bis 4, wobei Schritt (d) den Schritt (d2) umfasst, der das Reinigen der Sterolfettsäureester enthaltenden Mischung durch Abtrennen von Fettsäurealkylester aus der Mischung umfasst.

6. Das Verfahren nach Anspruch 5, umfassend einen weiteren Schritt des Zuführens von im Schritt (d2) abgetrenntem Fettsäurealkylester in die Sterolzusammensetzung, die Fettsäureglycerid-Zusammensetzung, den Veresterungskatalysator und/oder in die in Schritt (a) gebildete Reaktionsmischung.

7. Das Verfahren nach einem der Ansprüche 1 bis 6, wobei der Hydrolysierungskatalysator und die Alkylierungskomponente in Schritt (c) als vorgefertigte Hydrolysierungs- und Alkylierungszusammensetzung zugesetzt werden.

8. Das Verfahren nach einem der Ansprüche 1 bis 7, wobei der Hydrolysierungskatalysator KOH ist, und die Alkylierungskomponente Methanol ist, die bevorzugt als eine vorgefertigte methanolische KOH-Zusammensetzung zugesetzt werden.

9. Das Verfahren nach einem der Ansprüche 1 bis 8, wobei in Schritt (a) der Veresterungskatalysator aus der Gruppe ausgewählt wird, die Metallalkoxid, wie etwa NaOCH₃ und NaOC₂H₅, Metalloxide, Alkalihydroxide, Metallseifen, Metalllegierungen, Metallhydride, Metallamide und deren Mischungen umfasst.

10. Das Verfahren nach einem der Ansprüche 1 bis 9, wobei die Reaktionsmischung in Schritt (c) 0,01-10 Gew.-%, bevorzugt 0,05-2 Gew.-% des Hydrolysierungskatalysators umfasst.

11. Das Verfahren nach einem der Ansprüche 1 bis 10, wobei die Reaktionsmischung in Schritt (c) 0,01-75 Gew.-%, bevorzugt 0,1-30 Gew.-%, am bevorzugtesten 0,5-30 Gew.-% der Alkylierkomponente umfasst.

12. Das Verfahren nach einem der Ansprüche 1 bis 1 1 , wobei die Hydrolysierungs- und Alkylierzusammensetzung oder ihre separaten Komponenten mindestens 50 Gew.-% Methanol und höchstens 50 Gew.-% KOH, bevorzugt 65-99,5 Gew.-%, bevorzugter 80-99 Gew.-%, am bevorzugtesten 85-95 Gew.-% Methanol und bevorzugt 0,5-35 Gew.-%, bevorzugter 1-20 Gew.-%, am bevorzugtesten 5-15 Gew.-% KOH umfassen.

13. Das Verfahren nach einem der Ansprüche 1 bis 12, wobei Schritt (d) das Reinigen der Sterolfettsäureester enthaltenden Mischung durch Bleichen, Filtrieren und/oder Desodorieren umfasst.

14. Das Verfahren nach einem der Ansprüche 1 bis 13, wobei in Schritt (a) die Reaktionsmischung durch Einarbeiten von, im Molverhältnis, 1 Mol eines oder mehrerer Sterole, 0,3-0,7 Mol eines oder mehrerer Fettsäureglyceride und 0,9-2,1 Mol einer oder mehr Fettsäuremethylester, die aus dem Schritt (d2) wiederaufbereitet wurden, gebildet wird.

15. Das Verfahren nach einem der Ansprüche 1 bis 14, wobei der Hydrolysierungskatalysator und die Alkylierungskomponente der Sterolfettsäureester enthaltenden Mischung in Schritt (c) zugesetzt werden, wenn die Veresterungsreaktionen abgeschlossen oder im Wesentlichen abgeschlossen sind.

16. Das Verfahren nach einem der Ansprüche 1 bis 15, wobei die hergestellte, an Sterolfettsäureester reiche Zusammensetzung mindestens 90 Gew.-%, bevorzugt mindestens 94 Gew.-%, bevorzugter mindestens 97 Gew.-% an Sterolfettsäureester(n) umfasst.

17. Eine Methode zur Wiedergewinnung von lebensmittelverträglichen Sterolfettsäureester(n) aus einer Fettsäureglyceride und Sterolfettsäureester enthaltenden Fettmischung, umfassend die folgenden Schritte:
(i) Zusetzen eines Hydrolysierungskatalysator und einer Alkylierungskomponente zu der Fettmischung, um die Glyceride zu hydrolysieren und entsprechende(n) Fettsäurealkylester herzustellen, ohne wesentliche Hydrolysierung des/der Sterolfettsäureester,
(ii) Entfernen von überschüssiger Alkylierungskomponente, dem Hydrolysierungskatalysator und Glycerol,
(iii) Reinigen des gewonnenen Produkts durch Waschen mit Wasser und/oder durch eine Adsorptionsmittelbehandlung oder durch Waschen oder mit einer sauren, wässrigen Lösung und/oder durch eine Adsorptionsmittelbehandlung, und
(iv) Reinigen des gewonnenen Produktes durch Desodorieren, um den/die Fettsäurealkylester und Verunreinigungen zu entfernen und reine(n) Sterolfettsäureester herzustellen.

18. Die Methode nach Anspruch 17, wobei der Hydrolysierungskatalysator aus der Gruppe von Basen ausgewählt wird, die Alkalihydroxide, wie etwa KOH und/oder NaOH, und Alkalioxide umfasst.

19. Die Methode nach Anspruch 17 oder 18, wobei die Alkylierungskomponente aus der Gruppe niedrigerer Alkohole, die C1-4 Alkanole, bevorzugt Methanol und/oder Ethanol, umfasst, ausgewählt wird.

20. Die Methode nach einem der Ansprüche 17 bis 19, wobei die Fettmischung vor dem Zusetzen des Hydrolysierungskatalysator und der Alkylierungskomponente 1 - 99 Gew.-%, bevorzugt 30 - 97 Gew.-%, und bevorzugter 70 - 95 Gew.-% Glyceride und 1 - 99 Gew.-%, bevorzugt 3 - 70 Gew.-% und bevorzugter 5 - 30 Gew.-% Sterolfettsäureester enthält.

21. Die Methode nach einem der Ansprüche 17 bis 20, umfassend das Zusetzen von 0,01-10 Gew.-%, bevorzugt 0,05-2 Gew.-% des Hydrolysierungskatalysators zu der Fettmischung.

22. Die Methode nach einem der Ansprüche 17 bis 21, umfassend das Zusetzen von 0,01-75 Gew.-%, bevorzugt 0,1-30 Gew.-%, bevorzugter 0,5-30 Gew.-% der Alkylierkomponente zu der Fettmischung.

23. Die Methode nach einem der Ansprüche 17 bis 22, umfassend das Zusetzen des Hydrolysierungskatalysators und der Alkylierungdskomponente als vorgefertigte Hydrolysierungs- und Alkylierungszusammensetzung.

24. Die Methode nach einem der Ansprüche 17 bis 23, wobei die Hydrolysierungs- und Alkylierungszusammensetzung oder ihre Komponenten mindestens 50 Gew.-% Methanol und höchstens 50 Gew.-% KOH, bevorzugt 65-99,5 Gew.-%, bevorzugter 80-99 Gew.-%, am bevorzugtesten 85-95 Gew.-% Methanol und bevorzugt 0,5-35 Gew.-%, bevorzugter 1-20 Gew.-%, am bevorzugtesten 5-15 Gew.-% KOH umfassen.

25. Die Methode nach einem der Ansprüche 17 bis 24, wobei der Schritt (i) bei einer Temperatur von zwischen 60-100°C, bevorzugt zwischen 60-80°C, bei einem Druck von höchstens 100 kPa, bevorzugt höchstens 7 kPa, und für eine Dauer von zwischen 1 Minute bis 6 Stunden, bevorzugt von zwischen 30 Minuten bis 2 Stunden, durchgeführt wird.

26. Die Methode nach einem der Ansprüche 17 bis 25, wobei der Schritt (iv) bei einer Temperatur von zwischen 160-230°C, bevorzugt zwischen 190-210°C, und bei einem Druck von 1-1000 Pa, bevorzugt 50-500 Pa, durchgeführt wird.

## Revendications

1. Un procédé pour la production d'une composition riche en ester d'acide gras stérolique, comprenant les étapes de:
(a) combinaison
- d'une composition stérolique comprenant un ou plusieurs stérols
- d'une composition de glycéride d'acide gras, comprenant des esters d'acide gras de un ou plusieurs acides gras, et
- d'un catalyseur d'estérification pour former un mélange réactionnel,
(b) estérification de(s) stérol(s) dans le mélange réactionnel obtenu pour produire un mélange contenant un ester d'acide gras stérolique,
(c) addition d'un catalyseur hydrolysant et d'un agent alkylant pour hydrolyser les mono-, di- et/ou triglycérides présents et pour produire le(s) ester(s) alkylique(s) d'acide gras et glycérol correspondant, et
(d) purification du mélange contenant l'ester d'acide gras stérolique pour former une composition riche en ester d'acide gras stérolique.

2. Le procédé selon la revendication 1, dans lequel au mélange réactionnel ou à ses constituants de l'étape (a) est ajouté au moins un ester alkylique d'acide gras.

3. Le procédé selon la revendication 1 ou 2, dans lequel l'étape (d) inclut l'étape (d1) comprenant la purification dudit mélange contenant l'ester d'acide gras stérolique par élimination du glycérol contenu dans ledit mélange.

4. Le procédé selon la revendication 3, dans lequel dans l'étape (d1) le catalyseur d'estérification et/ou le catalyseur hydrolysant sont éliminés en même temps que le glycérol du mélange contenant l'ester d'acide gras stérolique.

5. Le procédé selon l'une quelconque des revendications 1 à 4, dans lequel l'étape (d) inclut l'étape (d2) comprenant la purification dudit mélange contenant l'ester d'acide gras stérolique par séparation de l'ester alkylique d'acide gras contenu dans ledit mélange.

6. Le procédé selon la revendication 5, comprenant une étape supplémentaire consistant à ajouter l'ester alkylique d'acide gras séparé dans l'étape (d2) dans la composition stérolique, la composition de glycéride d'acide gras, le catalyseur d'estérification et/ou le mélange réactionnel formé dans l'étape (a).

7. Le procédé selon l'une quelconque des revendications 1 à 6, dans lequel le catalyseur hydrolysant et l'agent alkylant sont ajoutés dans l'étape (c) sous forme d'une composition hydrolysante et alkylante pré-préparée.

8. Le procédé selon l'une quelconque des revendications 1 à 7, dans lequel le catalyseur hydrolysant consiste en KOH et l'agent alkylant est du méthanol, qui est de préférence ajouté sous forme d'une composition de KOH méthanolique pré-préparée.

9. Le procédé selon l'une quelconque des revendications 1 à 8, dans lequel dans l'étape (a) le catalyseur d'estérification est choisi dans le groupe comprenant les alkoxydes métalliques, tels que NaOCH₃ et NaOC₂H₅ les oxydes métalliques, les hydroxydes alcalins, les savons métalliques, les alliages métalliques, les hydrures métalliques, les amides métalliques et leurs mélanges.

10. Le procédé selon l'une quelconque des revendications 1 à 9, dans lequel le mélange réactionnel dans l'étape (c) comprend 0,01-10% en poids, de préférence 0,05-2% en poids de catalyseur hydrolysant.

11. Le procédé selon l'une quelconque des revendications 1 à 10, dans lequel le mélange réactionnel dans l'étape (c) comprend 0,01-75% en poids, de préférence 0,1 à 30% en poids, préférentiellement de 0,5 à 30% en poids, de l'agent d'alkylation.

12. Le procédé selon l'une quelconque des revendications 1 à 11, dans lequel la composition hydrolysante et alkylante ou ses constituants séparés comprennent au moins 50% de méthanol et au plus 50% de KOH, de préférence de 65-99,5%, plus préférentiellement de 80-99%, et encore plus particulièrement de 85-95% en poids de méthanol et de préférence 0,5-35%, plus préférentiellement 1-20%, et encore plus particulièrement 5-15% en poids of KOH.

13. Le procédé selon l'une quelconque des revendications 1 à 12, dans lequel l'étape (d) inclut la purification par blanchiment, filtration et/ou désodorisation de l'ester d'acide gras stérolique.

14. Le procédé selon l'une quelconque des revendications 1 à 13, dans lequel dans l'étape (a) le mélange réactionnel est formé par emploi, en proportions molaires, de 1 mol de un ou plusieurs stérols, de 0,3-0,7 mol de un ou plusieurs glycérides d'acides gras et de 0,9-2,1 mol de un ou plusieurs esters méthyliques d'acides gras recyclés dans l'étape (d2).

15. Le procédé selon l'une quelconque des revendications 1 à 14, dans lequel le catalyseur hydrolysant et l'agent alkylant sont ajoutés au mélange contenant l'ester d'acide gras stérolique dans l'étape (c) lorsque les réactions d'estérification sont achevées ou pratiquement achevées.

16. Le procédé selon l'une quelconque des revendications 1 à 15, dans lequel la composition riche en ester d'acide gras stérolique produite comprend au moins 90%, de préférence au moins 94%, plus préférentiellement au moins 97% en poids d'ester(s) d'acide(s) gras stérolique(s).

17. Un procédé pour obtenir un ou plusieurs ester(s) d'acide(s) gras stérolique(s) de qualité alimentaire à partir d'un mélange gras contenant des glycérides d'acides gras et des esters d'acides gras stérolique(s) comprenant les étapes de:
(i) l'addition audit mélange gras d'un catalyseur hydrolysant et d'un agent alkylant pour hydrolyser les glycérides et pour produire l'ester alkylique d'acide gras(s), correspondant sans que ne se produise une hydrolyse significative de ou des ester(s) d'acide(s) gras stérolique(s),
(ii) l'élimination du composant alkylant en excès, la catalyseur hydrolysant et le glycérol.
(iii) la purification du produit obtenu par lavage à l'eau et/ou par un traitement par un adsorbent ou par lavage ou avec une solution acide aqueuse et/ou par traitement par un adsorbent, et
(iv) la purification du produit obtenu par désodorisation pour éliminer le ou les ester(s) d'acide(s) gras alkylique(s) et les impuretés et pour produire le ou les ester(s) d'acide(s) gras stérolique(s) sous forme pure.

18. Le procédé selon la revendication 17, dans lequel le catalyseur hydrolysant est choisi dans le groupe de bases comprenant les hydroxydes alcalins, telle que KOH et/ou NaOH, et les oxydes alcalins.

19. Le procédé selon la revendication 17 ou 18, dans lequel l'agent alkylant est choisi dans le groupe des alcools inférieurs comprenant les alcanols en C₁-C₄, de préférence le méthanol et/ou l'éthanol.

20. Le procédé selon l'une quelconque des revendications 17 à 19 dans lequel le mélange gras, avant addition du catalyseur hydrolysant et de l'agent d'alkylation, contient 1 à 99%, de préférence 30 à 97%, et plus particulièrement 70 à 95% en poids de glycérides et 1 à 99%, de préférence 3 à 70%. et plus particulièrement 5 à 30% en poids d'ester(s) d'acide(s) gras stérolique(s).

21. Le procédé selon l'une quelconque des revendications 17 à 20, comprenant l'addition au mélange gras de 0,01 à 10%, de préférence 0,05 à 2%, en poids de catalyseur hydrolysant.

22. Le procédé selon l'une quelconque des revendications 17 à 21, comprenant l'addition au mélange gras de 0,01 à 75%, de préférence 0,1 à 30%, plus particulièrement 0,5 à 30%, en poids d'agent alkylant.

23. Le procédé selon l'une quelconque des revendications 17 à 22, comprenant l'addition du catalyseur hydrolysant et de l'agent alkylant sous forme d'une composition hydrolysante et alkylante pré-préparée.

24. Le procédé selon l'une quelconque des revendications 17 à 23, dans lequel la composition hydrolysante et alkylante ou les constituants qui la forme contient au moins 50% en poids de méthanol et au plus 50% en poids de KOH, de préférence 65 à 99.5%, plus particulièrement 80 à 99%, plus préférentiellement 85 à 95% en poids de méthanol et de préférence 0,5 à 35%, plus particulièrement 1 à 20%, plus préférentiellement 5-15% en poids de KOH.

25. Le procédé selon l'une quelconque des revendications 17 à 24, dans lequel l'étape (i) est mise en oeuvre à une température comprise entre 60 et 100 °C, de préférence entre 60 et 80°C, sous une pression inférieure à 100 kPa, de préférence inférieure à 7 kPa, et pendant une durée comprise entre 1 minute et 6 heures, de préférence de 30 minutes à 2 heures.

26. Le procédé selon l'une quelconque des revendications 17 à 25, dans lequel l'étape (iv) est mise en oeuvre à une température comprise entre 160 et 230°C, de préférence entre 190 et 210° C, et sous une pression comprise entre 1 et 1000 Pa, de préférence 50 et 500 Pa.
